# EUROPÄISCHE PATENTSCHRIFT

(11) **EP 1 435 509 B1**
(45) Veröffentlichungstag und Bekanntmachung des Hinweises auf die Patenterteilung: **16.01.2008**
(21) Anmeldenummer: 03029499.5
(22) Anmeldetag: 20.12.2003
(51) Int. Cl.: G01D 5/26, G01D 5/30

(54) **Optoelektronisches Messverfahren und Vorrichtung**
Optoelectronic measuring method and device
Procédé et dispositif de mesure opto-électronique

(30) Priorität: 03.01.2003 DE 10300224
(43) Veröffentlichungstag der Anmeldung: 07.07.2004
(73) Patentinhaber: Reime, Gerd, 75328 Schömberg (DE)
(72) Erfinder: Reime, Gerd, 75328 Schömberg (DE)
(74) Vertreter: Reinhardt, Harry

(56) Entgegenhaltungen:
- EP-A- 0 809 120
- DE-A- 3 730 102
- US-A- 5 103 085
- US-A- 5 666 037

## Beschreibung

Die Erfindung betrifft ein optoelektronisches Messverfahren nach dem Oberbegriff des Anspruches 1 sowie eine optoelektronische Messanordnung nach dem Oberbegriff des Anspruches 12.

Aus der EP 0 706 648 B1 ist ein optisches Messsystem bekannt, bei dem wenigstens zwei Leuchtdioden als Lichtquellen Licht wechselseitig so aussenden, dass an einem Empfänger ein Gleichlichtsignal ohne taktsynchrone Wechsellichtanteile anliegt. Das dortige System wird zur Erkennung von Regentropfen auf einer Windschutzscheibe eingesetzt, kann jedoch auch allgemein zur Positions- und Abstandsmessung eingesetzt werden. Sind z.B. zwei Lichtquellen, z.B. in Form von LEDs, und ein Empfänger vorgesehen, so reflektiert ein über den optoelektronischen Elementen befindlicher Gegenstand Licht von den LEDs zum Empfänger. Die Schaltung ist dabei so aufgebaut, dass Fremdlicht keinen Einfluss hat und Lichtsignale deutlich wahrgenommen werden können, die z.B. aus den zwischen Lichtquelle und Empfänger bestehenden Lichtstrecken stammen. Die optische Übertragung von jeder Lichtquelle zum Empfänger ist von der Position und Beschaffenheit des das Licht rückstrahlenden Gegenstands grundsätzlich abhängig. Bei dem dortigen Prinzip werden nun jedoch beide Lichtquellen in ihrer Intensität so geregelt, dass der Empfänger sie mit gleicher Intensität sieht. Das Verhältnis der hierzu notwendigen LED-Ströme entspricht dem Verhältnis der optischen Übertragung der beiden Strecken. Die Regelung steuert die Betriebsströme der beiden LEDs stets gegensinnig, so dass eine Ausregelung der Empfangssignale zu Null erfolgt. Damit ist das Regelsignal proportional zum Verhältnis eines der beiden optischen Übertragungsfaktoren zur Gesamtübertragung. Insbesondere ist es ohne Kenntnis der Übertragungsfaktoren möglich, deren Gleichheit zu erkennen und damit die Mittelposition des Gegenstandes. Das bedeutet insbesondere, dass unabhängig von der Art des Gegenstandes eine Position, die gleiche Abstände von den LEDs aufweist, sicher erkannt werden kann. Die optische Übertragung hängt damit monoton von der Entfernung des Gegenstands ab.

Ausgehend von diesem Stand der Technik liegt der vorliegenden Erfindung die Aufgabe zugrunde, ein Messverfahren und eine Messanordnung zu schaffen, die möglichst günstig zur Erfassung von Dreh- und Rotationsbewegungen eingesetzt werden können.

Diese Aufgabe wird durch ein Messverfahren mit den Merkmalen des Anspruches 1 und durch eine Messanordnung mit den Merkmalen des Anspruchs 12 gelöst.

Hierzu werden wenigstens drei Lichtquellen reihum auf einer gedachten geschlossenen Linie so angeordnet, dass sie reihum unter Bildung von wenigstens drei verschiedenen Gruppen von Lichtquellen betrieben werden können. Mit anderen Worten werden z.B. immer zwei der drei Lichtquellen als Sender betrieben, während die dritte Lichtquelle als Empfänger beschaltet ist. Ist dieser Takt beendet, wird im nächsten Takt der Empfänger wieder als Sender genutzt, wobei einer der bisherigen Sender zum Empfänger wird. Im dritten Takt wird dann die bisher noch nicht gebildete Kombination aus zwei Sendern und einem Empfänger gebildet, so dass reihum alle Erfassungsmöglichkeiten genutzt werden. Dieses Prinzip ist auch mit mehr als drei Lichtquellen zu realisieren. Statt die jeweils dritte Lichtquelle als Empfänger zu benutzen, kann auch ein gesonderter Empfänger z. B. in Form einer Photodiode vorgesehen werden. In diesem Fall ist bei drei Lichtquellen die jeweils dritte LED vorzugsweise abgeschaltet. Bei vorgegebener Anordnung ergeben sich somit Signalverläufe, die eine eindeutige Erkennung der Bewegung eines vor der Anordnung kreisenden Objekts ermöglichen, so dass ein virtueller Drehknopf gebildet werden kann, der mit wenigen Bauelementen auskommt.

Im günstigsten Fall sind lediglich drei LEDs erforderlich, die reihum so geschaltet werden, dass stets eine LED als Empfänger und die andern beiden LEDs als Lichtquellen verwendbar sind. Wird zudem eine Anordnung gewählt, bei der sich die Lichtquellen in den Ecken eines gleichseitigen Dreiecks befinden, ergeben sich einfach auswertbare Signalverläufe zur Bestimmung der Drehbewegung. Dabei ist es nicht erforderlich, dass der Benutzer die Oberfläche berührt, sondern er kann im Raum vor der Messanordnung die Bewegung durchführen. Dennoch ist wie bisher auch ein mechanischer Knopf abbildbar, indem vor der Messanordnung ein rotierendes Element vorgesehen wird, das auf seiner Unterseite optisch erkennbare Unterschiede, wie z.B. nur einen weißen oder schwarzen Punkt aufweist.

Weitere Vorteile ergeben sich aus den Unteransprüchen.

Im Folgenden wird die Erfindung anhand von in den Figuren dargestellten Ausführungsbeispielen näher erläutert. Es zeigen:
- Fig. 1: eine schematische Darstellung der Messanordnung,
- Fig. 2: ein Blockschaltbild für eine Ausführungsform ohne gesondertes Empfangselement,
- Fig. 3: ein Blockschaltbild für eine Ausführungsform mit einer Photodiode als Empfänger,
- Fig. 4: typische Signalverläufe bei einer Drehbewegung eines Objekts vor der Messanordnung,
- Fig. 5, 6, 7: schematische Darstellungen von Ausgestaltung eines Drehknopfes bei einer Beschaltung gemäß Fig. 2,
- Fig. 8, 9: schematische Darstellungen des Aufbaus einer Vorrichtung mit einer Schaltung gemäß Fig. 3

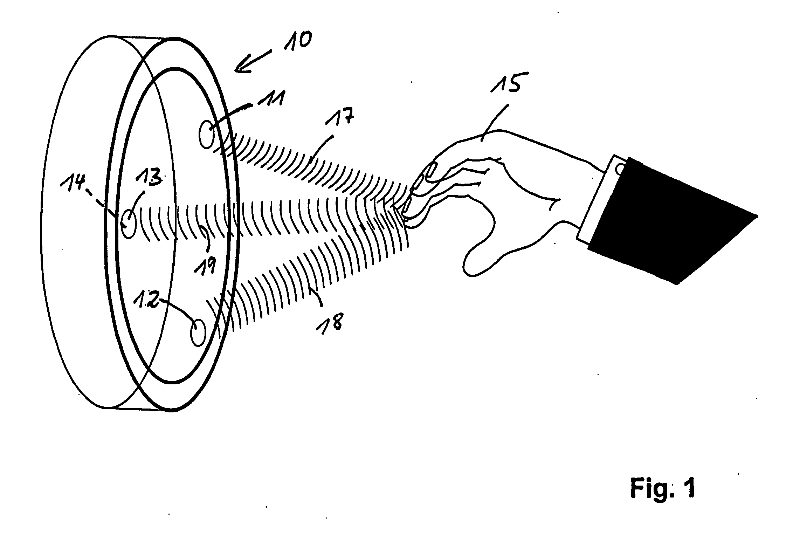

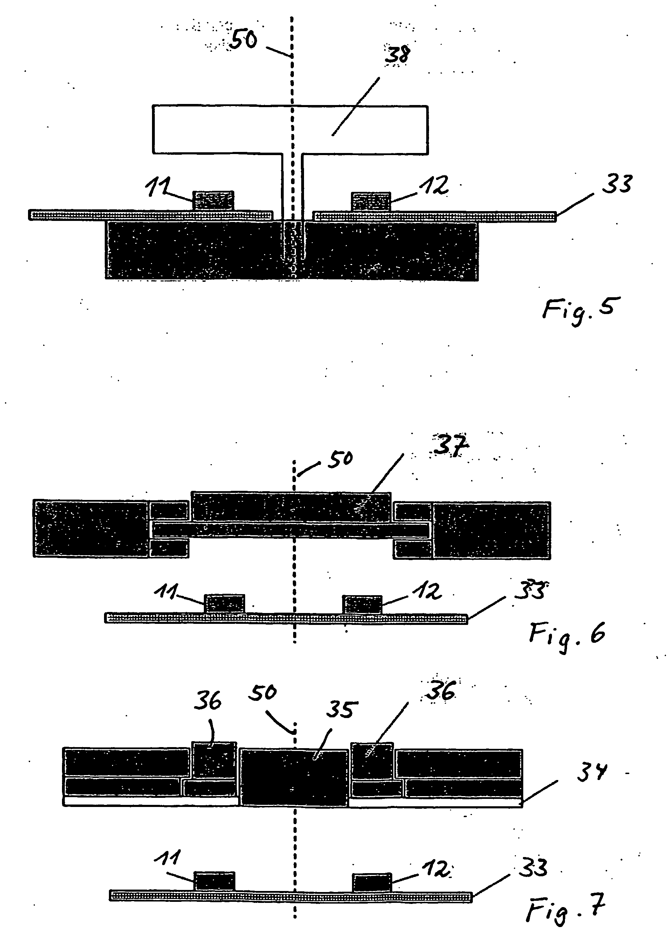

Die Figuren zeigen eine optoelektronische Messanordnung 10 mit wenigstens drei Lichtquellen 11, 12, 13, die Licht getaktet, zeitsequentiell aussenden, und wenigstens einem Empfänger 14; 16 zum Empfang des von wenigstens zwei der drei Lichtquellen ausgesandten und an einem Objekt 15 z.B. einer Hand in Fig. 1 reflektierten Licht. Mit dieser Messanordnung sollen insbesondere Dreh- oder Rotationsbewegungen erkannt werden, die vor der Messanordnung 10 erfolgen. Es ergibt sich damit nachgebildet ein Drehknopf 38 oder ein virtueller Drehknopf, bei dem lediglich die Drehbewegung des Objekts 15 wie z.B. eines Fingers oder einer Hand vor der Messanordnung 10 erfolgt, ohne dass diese sich selbst drehen muss. Es sind allerdings auch Gestaltungen z.B. gemäß den Figuren 5 - 9 möglich, bei denen tatsächlich noch eine Rotation eines drehbaren Betätigungselements vor der Messanordnung erfolgt.

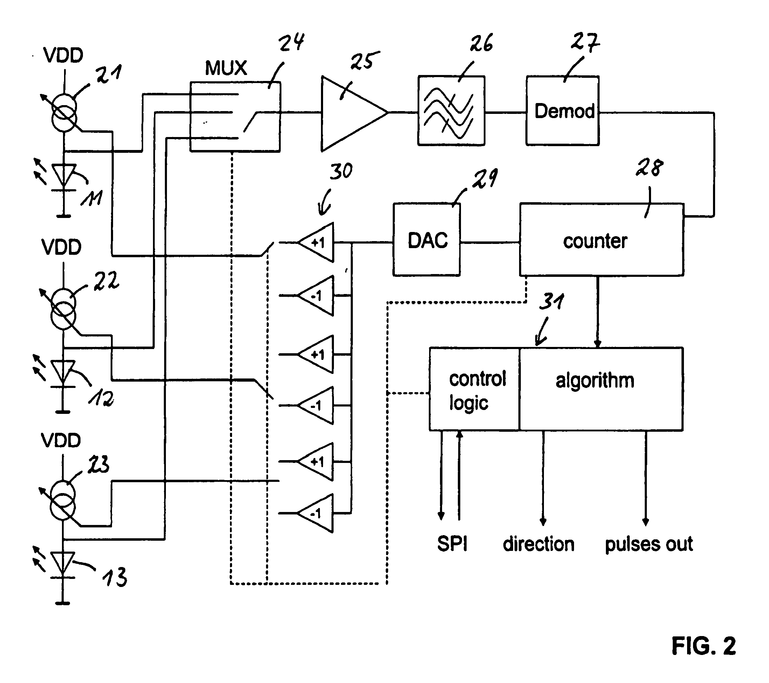

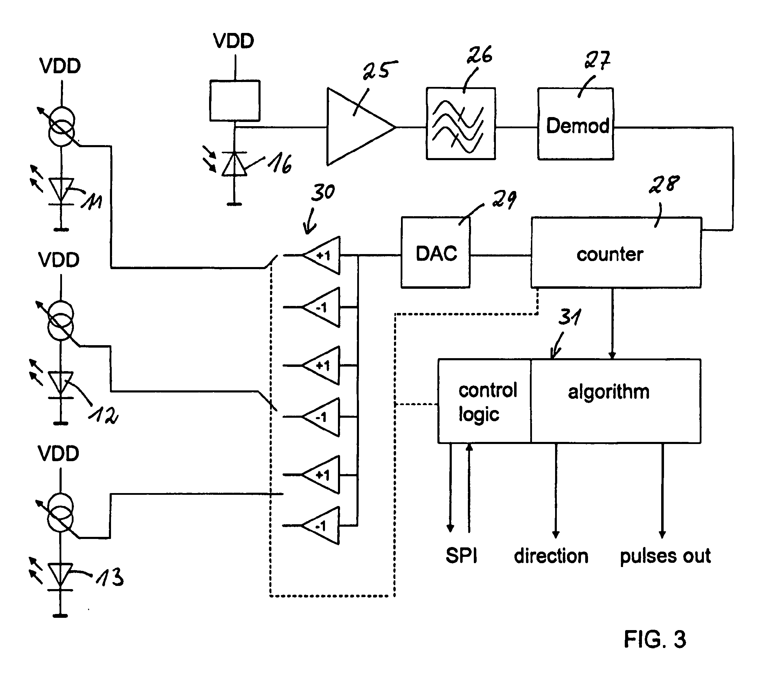

Die Messanordnung weist ferner eine Vorrichtung zur Regelung der Intensität der Lichtquellen 11, 12 in Abhängigkeit des Empfangssignals am Empfänger 14, 16 auf, wobei das Empfangssignal durch das aus den beiden Lichtstrecken am Empfänger ankommenden Licht gebildet wird. Die Regelung bewirkt, dass der Empfänger das Licht von wenigstens zwei Licht aussendenden Lichtquellen 11,12 der insgesamt wenigstens drei Lichtquellen 11,12,13 mit gleicher Intensität wahrnimmt. Dieses Prinzip wird weiter unten im Hinblick auf die Figuren 2 und 3 näher erläutert.

Gemäß Fig. 1 sind die Lichtquellen 11, 12, 13 reihum auf einer gedachten geschlossenen Linie angeordnet, wobei als gedachte geschlossene Linie vorzugsweise ein Kreis oder eine Ellipse in Frage kommt. In Fig. 1 senden die Lichtquellen 11,12 Licht aus, das von der Hand als Objekt 15 reflektiert und vom Empfänger 14 empfangen wird. Das Licht gelangt also über die Lichtstrecken 17, 19 und 18, 19 von den Lichtquellen 11,12 zum Empfänger 14. Um nun die Drehbewegung zu erfassen, werden die Lichtquellen reihum unter Bildung von wenigstens drei verschiedenen Gruppen, im Ausführungsbeispiel drei Paaren, von Licht aussendenden Lichtquellen betrieben. Dabei senden z.B. nacheinander zunächst die Lichtquellen 11, 12, dann die Licht quellen 12, 13 und schließlich die Lichtquellen 13, 11.

Im Ausführungsbeispiel der Fig. 1 handelt es sich bei den Lichtquellen 11, 12, 13 um LEDs. Da grundsätzlich jede LED auch als Empfänger betrieben werden kann, werden somit reihum Empfänger- und Senderfunktion weitergeschaltet Während also in Fig. 1 eine Lichtquelle 13 der drei LEDs als Empfänger 14 beschaltet ist, während die anderen beiden LEDs als Lichtquellen 11, 12 beschaltet sind, würden im nächsten Takt z.B. die Lichtquellen 12 und 13 Licht aussenden und die Lichtquelle 11 wäre als LED dann als Empfänger beschaltet. Somit werden also reihum nicht nur die Gruppen von Lichtquellen weitergeschaltet, sondern auch die Funktion der Lichtquelle als Empfänger oder als Sendeelement zu dienen. Gleichzeitig bilden sich die verschiedenen Gruppen im Ausführungsbeispiel von jeweils zwei LEDs.

Dies wird dadurch möglich, dass das verwendete Halbleitermaterial einer LED für die ausgesandte Wellenlänge durchsichtig sein muss. Die bedeutet, dass die Bandlücke in dem verwendeten Halbleiter größer sein muss als die ausgesandte Wellenlänge.

Andererseits kann ein Halbleiter nur Strahlung erzeugen, dessen Wellenlänge zur Bandlücke passt. Damit liegt, vereinfach gesagt, die Bandlücke des Halbleitermaterial in der Nähe der dominierenden Wellenlänge. Durch geeignete Dotierung und Schichtaufbau kann dieses Verhalten in Grenzen beeinflusst werden. Insbesondere verändert sich die Größe der Bandlücke im Halbleiter in Abhängigkeit vom Betriebsstrom. Dadurch überlappen sich bei bestimmten Technologien Sende- und Empfangsspektrum der LED, d.h. eine LED gleichen Typs kann sowohl als Sender, als auch als Empfänger in einem System verwendet werden. Diese Ausführungsform hat den Vorteil, dass im Wesentlichen nur drei optoelektronische Bauelemente für die Messanordnung erforderlich sind. Zudem bleibt die Mitte zwischen den Bauelementen frei. Dies ermöglicht eine größere Anzahl von Aufbauvarianten, wie sie weiter unten im Hinblick auf die Figuren 5 - 7 näher erläutert werden.

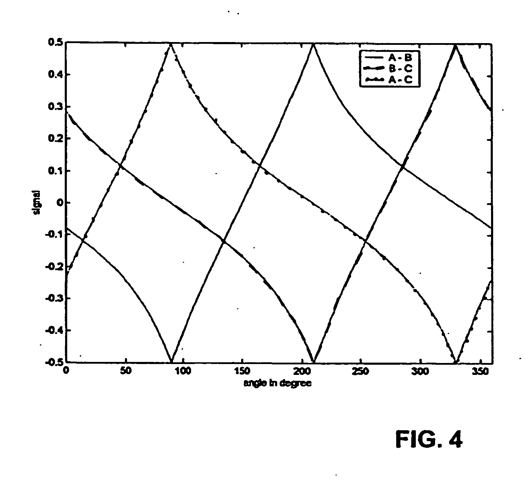

Die drei Lichtquellen 11, 12, 13 sind vorzugsweise in den Ecken eines gleichseitigen Dreiecks angeordnet, so dass sich bei einer Bewegung, eines Objekts um eine durch den Schwerpunkt des Dreiecks gehende Rotationsachse 50 ein Signalverlauf gemäß Fig. 4 ergibt, der die Bestimmung der Drehbewegung ermöglicht. Da die Leuchtdioden zudem auch zur Abstandsdetektion eingesetzt werden können, ist es z.B. möglich bei Annäherung eines Objekts die gesamte Anordnung wirksam zu schalten oder auch durch Zuschalten einer Beleuchtung für den Benutzer erkennbar zu machen oder bei Entfernung des Objekts 15 die Anordnung wieder abzuschalten. Alternativ kann als Empfänger 16 eine Photodiode eingesetzt werden, die dann vorzugsweise im Schwerpunkte des gleichseitigen Dreiecks angeordnet wird.

Eine Anordnung der LEDs exakt in den Ecken eines gleichseitigen Dreiecks ist nicht zwingend erforderlich, erlaubt jedoch ohne größeren Rechenaufwand eine genaue Bestimmung des Objekts. Ohne diese Anordnung, also auch z.B. bei einer Anordnung der Lichtquellen nicht auf einem Kreis müssen zusätzliche Rechenoperationen durchgeführt werden, um zum gleichen Ergebnis zu kommen.

Durch die gewählte Anordnung erhält man einen Aufbau, mit dem sich die Winkelposition eines Objekts 15 bei Drehung um den Schwerpunkt des Dreiecks oder um einen Mittelpunkt der Anordnung messen lässt. Der Benutzer lässt um den Schwerpunkt dieses Dreiecks einen reflektierenden Gegenstand beliebiger Form kreisen. Dies kann z.B. der Finger des Benutzers sein, oder ein mechanisches Rad oder ein anderes drehbares Element, welches unterschiedliche Reflektionseigenschaften oder andere differenzierbare optische Eigenschaften auf seiner Unterseite aufweist, z.B. einen weißen Punkt besitzt, oder zur Hälfte weiß und zur Hälfte schwarz ausgebildet ist.

Fig. 2 zeigt ein Blockschaltbild der Elektronik bei Verwendung von Leuchtdioden als Empfängern, also dann, wenn keine Photodiode vorgesehen ist. Ausgehend vom Taktgenerator 28 werden über einen Digital-Analogwandler 29 zunächst die Lichtquellen 11, 12 als LEDs angesteuert, wobei die eine Lichtquelle invertiert zur anderen angesteuert wird, d.h. die beiden LEDs werden wechselweise getaktet. Die den beiden Lichtquellen 11, 12 zugeführte Leistung wird über Leistungsregler 21, 22 - und wenn die Lichtquelle 13 als Lichtquelle betrieben wird über den Leistungsregler 23 - hinsichtlich ihrer Intensität beeinflusst. Das von den Lichtquellen 11, 12 ausgesandte Licht wird von der Lichtquelle 13, einer LED als Empfänger 14 empfangen. Aus diesem Grund erhält die Lichtquelle 13 auch kein Signal vom Invertierer 30. Sie ist jedoch über den Multiplexer 24 an die Signalerfassung gekoppelt, die aus einem Vorverstärker 25 einem Bandfilter 26 und einem Taktdemodulator 27 besteht. Im Taktdemodulator 27 wird das Empfangssignal wieder den beiden Lichtstrecken, also kommend von der Lichtquelle 11 einerseits und der Lichtquelle 12 andererseits, zugeordnet, um hieraus ein entsprechendes Bewegungssignal zu erhalten. Das so ermittelte Signal wird erfasst und in der Regeleinheit 31 zur Bestimmung von Richtung und Anzahl der Umdrehung ausgewertet. Das so gewonnene Empfangssignal wird aber auch wiederum den Leistungsreglern 21, 22 zur Nachregelung der Lichtintensität der Lichtquellen 11 und 12 zugeführt.

Im nächsten Takt würden dann z.B. die Lichtquellen 11, 13 als LEDs Licht aussenden und die Lichtquelle 12 wäre der Empfänger. Es befindet sich also stets eine LED im ausgeschaltetem Zustand bzw. arbeitet als Empfänger und die beiden anderen LEDs werden 180° phasenverschoben getaktet, wobei ihre Amplitude über den Digital-Analogwandler 29 bestimmt wird.

Werden gemäß der Fig. 3 drei LEDs und eine Photodiode als Empfänger 16 verwendet, so entfällt der Multiplexer für den Empfänger und die Photodiode ist stets direkt mit dem Empfänger verbunden. Die übrige Schaltung bleibt gleich.

Bei der Aufbauvariante der Fig. 1 ist kein zusätzliches mechanisches Element erforderlich. Die drei Lichtquellen können insofern unter einem ringförmigen Fenster sitzen, das unter Umständen leicht gewölbt ist, um dem Benutzer eine taktile Rückmeldung zu geben. Insbesondere bei dieser Lösung ist es von Vorteil, wenn eine Fremdlichtkompensation vorgesehen ist, das dieses Fenster ja z.B. auch unmittelbar dem Sonnenlicht ausgesetzt sein kann. Diese optische Fenster kann auch selbst wiederum gelagert sein, so dass bei einem Antippen eine zusätzliche Funktion wie z.B. eine Schaltfunktion ausgelöst wird.

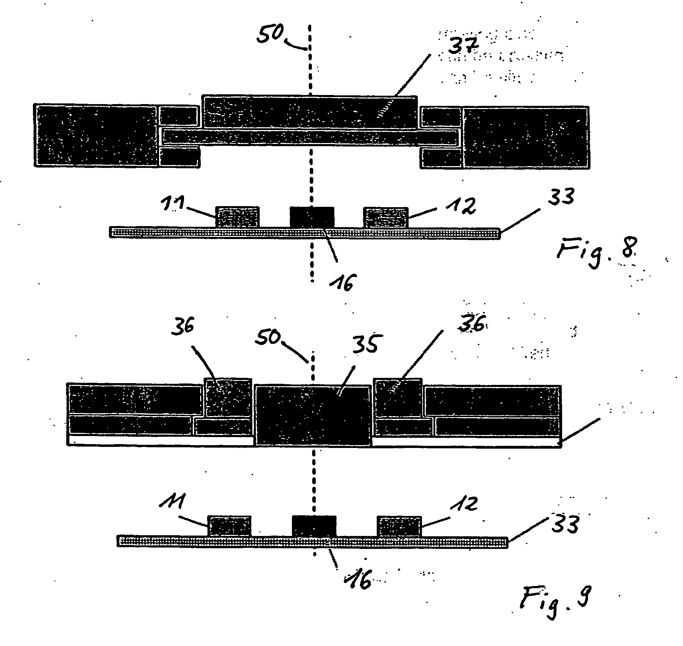

Die weiteren Figuren zeigen Aufbauvarianten, die mit einem zusätzlichen drehbaren Element versehen sind, unter dem und insofern auch geschützt die Lichtquellen angeordnet sind. So zeigen die Fig. 5 - 7 Aufbauvarianten bei der Verwendung von Leuchtdioden, die reihum als Lichtquelle und Empfänger beschaltet werden, also mit einer Schaltung gemäß Fig. 2. In diesem Fall bleibt der Mittelbereich frei, so dass z.B. ein sich drehender Knopf mittig zwischen den Lichtquellen 11, 12 hindurchgeführt werden kann. Die Lichtquellen befinden sich auf einer Leiterplatte, die ebenfalls von den um die Rotationsachse 50 drehbaren Drehknopf 38 durchgriffen wird. In Fig. 6 wird eine Drehscheibe 37 vorgesehen, die dieselbe Aufgabe einer mechanischen Nachbildung eines Drehknopfes entspricht. Drehknopf 38, Drehscheibe 37 als auch der Drehring 36 der Fig. 7, der dort an einer mittigen Lagerelement 35 gelagert ist, sind allesamt so gelagert, dass sie gedrückt oder gekippt werden können, um dadurch Zusatzinformation zu erfassen. Es ist auch durchaus möglich, wie in Fig. 7 dargestellt, sämtliche Elemente auf einer für die Wellenlänge des jeweils zu verwendeten Lichts durchlässigen Scheibe 34 anzuordnen, unter der dann die optoelektronischen Elemente angeordnet sind.

Bei den Aufbauvarianten der Fig. 8 und 9 ist mittig ein Empfänger 16 als Photodiode vorgesehen. Ansonsten entsprechend diese Figuren den Ausführungsformen gemäß Fig. 6 und 7 also mit einer Drehscheibe 37 oder einem Drehring 36, wobei auch hier zusätzliche Informationen durch Drücken oder Kippen von Drehscheibe 37 oder Drehring 36 übermittelt werden können. Diese zusätzlichen Bewegungen der Drehelemente können z.B. als Tastenfunktionen ausgewertet werden. Die damit in den Figuren 5 - 9 dargestellten Ausführungsformen sollten jedoch an der Unterseite der drehbaren Elemente Markierungen aufweisen, die eine optische Erkennung der Stellung dieser Elemente ermöglichen.

Da die Vorrichtung auch bei abgenommenen Drehknopf arbeitet, besteht auch die Möglichkeit, eine Vorrichtung zu schaffen, die bei gleichem Aufbau einmal analog wie ein Drehknopf und einmal wie ein virtueller Drehknopf betrieben werden kann. Der Hersteller oder Kunde kann also für die einen Kunden den Drehknopf aufsetzen und bei gleichem Aufbau für andere Kunden den Drehknopf einfach abnehmen. Oder durch Einsatz des Drehknopfs können weitere Zusatzfunktionen erst zugänglich gemacht werden.

Fig. 4 zeigt einen beispielhaften Verlauf der Regelsignale bei kontinuierlicher Drehung des Objekts 15 oder der anderen Drehelemente wie des Drehknopfs 38, der Drehscheibe 37 oder des Drehrings 36.

Bei der Auswertung gibt es offensichtlich 6 Positionen, die von jeweils zwei LEDs den gleichen Abstand aufweisen. Diese Positionen können zuverlässig als "NullDurchgänge" der Regelsignale erkannt werden. Durch Vergleich der Regelsignale können weitere sechs Positionen erkannt werden, da in diesen das Verhältnis der Entfernungen jeweils gleich ist. Somit ist es möglich, zunächst 12 Positionen zu unterscheiden. Wenigstens weitere 12 Positionen sind durch relative Auswertung zu erkennen, so dass die Drehposition recht genau zu erkennen ist. Ist eine Position erkannt worden, bei der zwei Regelsignale gleich waren, so können weitere Zwischenschritte aufgelöst werden, da die einzige Unbekannte, die Skalierung, nun bekannt ist. Wird das detektierte Objekt kreisförmig um den Schwerpunkt des Lichtquellen-Dreiecks bewegt, so ändern sich alle drei Regelsignale zyklisch. Durch Auswertung der statischen oder dynamischer Kantenpositionen können Drehrichtung und Drehgeschwindigkeit erkannt werden. Insbesondere ist es möglich je Umdrehung 12 oder mehr Pulse zuzüglich eines Richtungsbits auszugeben, wie dies bei mechanischen Drehknöpfen mit optischer Auswertung bisher der Fall ist. Die entsprechenden Ausgaben sind in den Fig. 2 und 3 dargestellt.

Wie bereits angedeutet, hängt das Regelsignal nicht nur von der Position ab, sondern auch von der Beschaffenheit der reflektierenden Oberfläche, insbesondere deren Abstand. Betrachtet man nun den dynamischen Lauf der Summe der Regelsignale, so kann zusätzlich, wie aus der deutschen Patentanmeldung DE 100 01 955 A1 bekannt, die Erkennung einer zusätzlichen Tippfunktion erkannt werden.

### Bezugszeichenliste

- 10: Messanordnung
- 11, 12, 13: Lichtquelle
- 14: Empfänger
- 15: Objekt
- 16: Empfänger (Photodiode)
- 17, 18: Lichtstrecke (ausgesandter Lichtstrahl)
- 19: Lichtstrecke (rückgestreuter Lichtstrahl)
- 21, 22, 23: Leistungsregler
- 24: Multiplexer
- 25: Vorverstärker
- 26: Bandfilter
- 27: Taktdemodulator
- 28: Taktgenerator
- 29: Digital-Analogwandler
- 30: Invertierer
- 31: Regeleinheit
- 33: Leiterplatte
- 35: Lagerelement
- 36: Drehring
- 37: Drehscheibe
- 38: Drehknopf
- 50: Rotationsachse

## Patentansprüche

1. Optoelektronisches Messverfahren, wobei wenigstens drei Lichtquellen (11, 12, 13) Licht getaktet, zeitsequentiell aussenden, und wenigstens ein Empfänger (14; 16) das von wenigstens zwei (11, 12) der drei Lichtquellen in wenigstens zwei unterschiedliche Lichtstrecken (17, 19; 18, 19) ausgesandte und an einem Objekt (15) reflektierte Licht empfängt,
und die Intensität der Lichtquellen (11, 12) in Abhängigkeit des Empfangssignals am Empfänger (14; 16) in Folge des aus den beiden Lichtstrecken am Empfänger ankommenden Lichts regelbar ist, so dass der Empfänger die zwei der drei Lichtquellen mit gleicher Intensität wahrnimmt,
**dadurch gekennzeichnet, dass** zur Erkennung einer Drehbewegung des Objekts (15) die Lichtquellen (11, 12, 13) reihum unter Bildung von wenigstens drei verschiedenen Gruppen (11, 12; 12, 13; 13, 11) von Licht aussendenden Lichtquellen betrieben werden.

2. Optoelektronisches Meßverfahren nach Anspruch 1, **dadurch gekennzeichnet, dass** die Lichtquellen auf einem gedachten Kreis oder eine Ellipse angeordnet sind.

3. Optoelektronisches Meßverfahren nach Anspruch 1 oder 2, **dadurch gekennzeichnet, dass** der Empfänger (16) eine Photodiode ist.

4. Optoelektronisches Meßverfahren nach einem der vorhergehenden Ansprüche, **dadurch gekennzeichnet, dass** die drei Lichtquellen (11, 12, 13) in den Ecken eines gleichseitigen Dreiecks angeordnet sind und dass der gegebenenfalls vor handene Empfänger (16) sich im Schwerpunkt des gleichseitigen Dreiecks befindet.

5. Optoelektronisches Meßverfahren nach einem der vorhergehenden Ansprüche, **dadurch gekennzeichnet, dass** die Lichtquellen (11, 12, 13) LEDs sind und dass jede Gruppe aus vorzugsweise zwei LEDs besteht.

6. Optoelektronisches Meßverfahren nach einem der vorhergehenden Ansprüche, **dadurch gekennzeichnet, dass** eine der drei Lichtquellen (13) als Empfänger (14) beschaltet ist, während die anderen beiden Lichtquellen als Lichtquellen (11, 12) beschaltet sind, und dass die Funktion, als Empfänger und als Lichtquelle zu dienen, reihum unter Bildung der verschiedenen Gruppen weitergeschaltet wird.

7. Optoelektronisches Meßverfahren nach einem der vorhergehenden Ansprüche, **dadurch gekennzeichnet, dass** das Objekt ein drehbares Element ist, das den Lichtquellen zugewandte, optisch differenzierbare Merkmale aufweist.

8. Optoelektronisches Meßverfahren nach Anspruch 7, **dadurch gekennzeichnet, dass** das drehbare Element ein mittig bzgl. der Lichtquellen gelagerter Drehknopf (38) ist.

9. Optoelektronisches Meßverfahren nach Anspruch 7 oder 8, **dadurch gekennzeichnet, dass** das drehbare Element zur Bedienung ohne Drehknopf abnehmbar ist und/oder zur Übermittlung von Zusatzinformation schwenkbar, kippbar und/oder in Richtung der Rotationsachse (50) begrenzt bewegbar ist.

10. Optoelektronisches Meßverfahren nach einem der vorhergehenden Ansprüche, **dadurch gekennzeichnet, dass** die Lichtquellen unter einem optisch durchlässigen Fenster eingebaut sind und die Drehbewegung ohne mechanische Elemente erfassen.

11. Optoelektronisches Meßverfahren nach Anspruch 10, **dadurch gekennzeichnet, dass** das Fenster zur Erfassung von Zusatzfunktionen schwenkbar, kippbar und/oder in Richtung der Rotationsachse (50) begrenzt bewegbar ist.

12. Optoelektronische Messanordnung (10) umfassend einen Drehknopf (36,37,38) zur Einstellung oder Regelung von Parametern und mit wenigstens drei Lichtquellen (11, 12, 13), die Licht getaktet, zeitsequentiell aussenden, und wenigstens einem Empfänger (14; 16) zum Empfang des von wenigstens zwei (11, 12) der drei Lichtquellen in wenigstens zwei unterschiedliche Lichtstrecken (17, 19; 18, 19) ausgesandten und an einem Objekt (15) reflektierten Lichts,
sowie mit einer Vorrichtung zur Regelung der Intensität der Lichtquellen (11, 12) in Abhängigkeit des Empfangssignals am Empfänger (14; 16) in Folge des aus den beiden Lichtstrecken am Empfänger ankommenden Lichts, so dass der Empfänger die zwei der drei Lichtquellen mit gleicher Intensität wahrnimmt,
**dadurch gekennzeichnet, dass** zur Erkennung der Drehbewegung des das Objekt (15) bildenden Drehknopfs die Lichtquellen (11, 12, 13) reihum auf einer gedachten, geschlossenen Linie angeordnet sind und reihum unter Bildung von wenigstens drei verschiedenen Gruppen (11, 12; 12, 13; 13, 11) von Licht aussendenden Lichtquellen betrieben werden.

13. Optoelektronische Messanordnung (10) nach Anspruch 12, **dadurch gekennzeichnet, dass** der Drehknopf (36,37,38) den Lichtquellen zugewandte, optisch differenzierbare Merkmale aufweist und/oder mittig bzgl. der Lichtquellen gelagert ist und/oder zur Bedienung ohne Drehknopf abnehmbar ist und/oder zur Übermittlung von Zusatzinformation schwenkbar, kippbar und/oder in Richtung der Rotationsachse (50) begrenzt bewegbar ist.

## Claims

1. Optoelectronic measuring method, wherein at least three light sources (11, 12, 13) emit light in a clocked, time-sequential manner, and at least one receiver (14; 16) receives the light, which is emitted by at least two (11, 12) of the three light sources into at least two different light paths (17, 19; 18, 19) and reflected by an article (15),
and the intensity of the light sources (11, 12) can be regulated in dependence upon the received signal at the receiver (14; 16) as a result of the light arriving at the receiver from the two light paths, so that the receiver senses the two of the three light sources with the same intensity,
**characterized in that** for detecting a rotational movement of the article (15) the light sources (11, 12, 13) are operated in turn so as to form at least three different groups (11, 12; 12, 13; 13, 11) of light-emitting light sources.

2. Optoelectronic measuring method according to claim 1, **characterized in that** the light sources are disposed on an imaginary circle or an ellipse.

3. Optoelectronic measuring method according to claim 1 or 2, **characterized in that** the receiver (16) is a photodiode.

4. Optoelectronic measuring method according to one of the preceding claims, **characterized in that** the three light sources (11, 12, 13) are disposed in the corners of an equilateral triangle and that, when present, the receiver (16) is situated in the centroid of the equilateral triangle.

5. Optoelectronic measuring method according to one of the preceding claims, **characterized in that** the light sources (11, 12, 13) are LEDs and that each group comprises preferably two LEDs.

6. Optoelectronic measuring method according to one of the preceding claims, **characterized in that** one of the three light sources (13) is connected as a receiver (14), while the other two light sources are connected as light sources (11, 12), and that the function of being used as a receiver and as a light source is passed around so as to form the different groups.

7. Optoelectronic measuring method according to one of the preceding claims, **characterized in that** the article is a rotatable element that has optically differentiable features facing the light sources.

8. Optoelectronic measuring method according to claim 7, **characterized in that** the rotatable element is a rotary knob (38) mounted centrally in relation to the light sources.

9. Optoelectronic measuring method according to claim 7 or 8, **characterized in that** the rotatable element is removable for operation without a rotary knob and/or is pivotable, tiltable and/or movable to a limited extent in the direction of the axis of rotation (50) in order to communicate additional information.

10. Optoelectronic measuring method according to one of the preceding claims, **characterized in that** the light sources are installed under an optically transparent window and acquire the rotational movement without mechanical elements.

11. Optoelectronic measuring method according to claim 10, **characterized in that** the window is pivotable, tiltable and/or movable to a limited extent in the direction of the axis of rotation (50) in order to acquire additional functions.

12. Optoelectronic measuring arrangement (10) comprising a rotary knob (36, 37, 38) for setting or regulating parameters and having at least three light sources (11, 12, 13), which emit light in a clocked, time-sequential manner, and at least one receiver (14; 16) for receiving the light, which is emitted by at least two (11, 12) of the three light sources into at least two different light paths (17, 19; 18, 19) and reflected by an article (15), as well as having an apparatus for regulating the intensity of the light sources (11, 12) in dependence upon the received signal at the receiver (14; 16) as a result of the light arriving at the receiver from the two light paths, so that the receiver senses the two of the three light sources with the same intensity,
**characterized in that** for detecting the rotational movement of the rotary knob forming the article (15) the.light sources (11, 12, 13) are disposed round an imaginary, closed line and are operated in turn so as to form at least three different groups (11, 12; 12, 13; 13, 11) of light-emitting light sources.

13. Optoelectronic measuring arrangement (10) according to claim 12, **characterized in that** the rotary knob (36, 37, 38) has optically differentiable features facing the light sources and/or is mounted centrally in relation to the light sources and/or is removable for operation without a rotary knob and/or is pivotable, tiltable and/or movable to a limited extent in the direction of the axis of rotation (50) in order to communicate additional information.

## Revendications

1. Procédé de mesure opto-électronique dans lequel au moins trois sources de lumière (11, 12, 13) émettent de la lumière de manière rythmée et suivant une séquence temporelle, et au moins un récepteur (14 ; 16) reçoit la lumière émise par au moins deux (11, 12) des trois sources de lumière dans au moins deux parcours de lumière (17, 19 ; 18, 19) différents, et réfléchie sur un objet (15),
et l'intensité des sources lumineuses (11, 12) est réglable en fonction du signal de réception sur le récepteur (14 ; 16) à la suite de la lumière provenant des deux parcours de lumière sur le récepteur, ce qui fait que le récepteur perçoit avec la même intensité les deux des trois sources lumineuses,
**caractérisé en ce que** pour reconnaître un mouvement de rotation de l'objet (15), les sources de lumière (11, 12, 13) sont mises en service à tour de rôle, en formant au moins trois groupes différents (11, 12 ; 12, 13 ; 13, 11) de sources de lumière émettant de la lumière.

2. Procédé de mesure opto-électronique selon la revendication 1, **caractérisé en ce que** les sources de lumière sont disposées sur un cercle ou une ellipse imaginaire.

3. Procédé de mesure opto-électronique selon la revendication 1 ou 2, **caractérisé en ce que** le récepteur (16) est une photodiode.

4. Procédé de mesure opto-électronique selon l'une des revendications précédentes, **caractérisé en ce que** les trois sources de lumière (11, 12, 13) sont disposées aux angles d'un triangle équilatéral et **en ce que** le récepteur (16), éventuellement prévu, se trouve au centre de gravité du triangle équilatéral.

5. Procédé de mesure opto-électronique selon l'une des revendications précédentes, **caractérisé en ce que** les sources de lumière (11, 12, 13) sont des LEDs et **en ce que** chaque groupe est constitué de préférence de deux LEDs.

6. Procédé de mesure opto-électronique selon l'une des revendications précédentes, **caractérisé en ce que** l'une des trois sources de lumière (13) est couplée en tant que récepteur (14), tandis que les deux sources de lumière sont couplées en tant que sources de lumière (11, 12) et **en ce que** la fonction, de servir de récepteur et de source de lumière, est commandée à tour de rôle en formant les différents groupes.

7. Procédé de mesure opto-électronique selon l'une des revendications précédentes, **caractérisé en ce que** l'objet est un élément tournant qui présente des caractéristiques différenciables de manière optique, tournées vers les sources de lumière.

8. Procédé de mesure opto-électronique selon la revendication 7, **caractérisé en ce que** l'élément tournant est un bouton tournant (38) monté au centre par rapport aux sources de lumière.

9. Procédé de mesure opto-électronique selon la revendication 7 ou 8, **caractérisé en ce que** l'élément tournant peut être retiré pour la commande sans bouton tournant et/ou peut pivoter, basculer et/ou être déplaçable dans une mesure limitée en direction de l'axe de rotation (50), pour transmettre une information supplémentaire.

10. Procédé de mesure opto-électronique selon l'une des revendications précédentes, **caractérisé en ce que** les sources de lumière sont montées sous une fenêtre transparente optiquement et détectent le mouvement de rotation sans éléments mécaniques.

11. Procédé de mesure opto-électronique selon la revendication 10, **caractérisé en ce que** pour détecter des fonctions supplémentaires, la fenêtre peut pivoter, basculer et/ou être déplaçable dans une mesure limitée en direction de l'axe de rotation (50).

12. Dispositif de mesure opto-électronique (10) comprenant un bouton tournant (36, 37, 38) pour régler ou réguler des paramètres et avec au moins trois sources de lumière (11, 12, 13) qui émettent de la lumière de manière rythmée et suivant une séquence temporelle, et avec au moins un récepteur (14 ; 16) pour recevoir la lumière émise par au moins deux (11, 12) des trois sources de lumière dans au moins deux parcours de lumière (17, 19 ; 18, 19) différents et réfléchie sur un objet (15), ainsi qu'avec un dispositif pour la régulation de l'intensité des sources de lumière (11, 12) en fonction du signal de réception sur le récepteur (14 ; 16) à la suite de la lumière provenant des deux parcours de lumière sur le récepteur, ce qui fait que le récepteur perçoit avec la même intensité les deux des trois sources de lumière, **caractérisé en ce que** pour reconnaître le mouvement de rotation du bouton tournant formant l'objet (15), les sources de lumière (11, 12, 13) sont disposées à tour de rôle sur une ligne fermée imaginaire, et sont mises en service à tour de rôle en formant au moins trois groupes différents (11, 12 ; 12, 13 ; 13, 11) de sources de lumière émettant de la lumière.

13. Dispositif de mesure opto-électronique (10) selon la revendication 12, **caractérisé en ce que** le bouton tournant (36, 37, 38) présente des caractéristiques différenciables optiquement, tourné vers les sources de lumière, et/ou est monté au centre par rapport aux sources de lumière et/ou peut être retiré pour la commande sans bouton tournant et/ou peut pivoter, basculer et/ou est déplaçable dans une mesure limitée en direction de l'axe de rotation (50), pour la transmission d'une information supplémentaire.
